# NEW EUROPEAN PATENT SPECIFICATION

(11) **EP 3 810 953 B2**
(45) Date of publication and mention of the opposition decision: **11.06.2025**
(45) Mention of the grant of the patent: 10.08.2022
(21) Application number: 19734909.5
(22) Date of filing: 06.06.2019
(51) Int. Cl.: F16D 65/097, F16D 55/228

(54) **SPRING FOR FRICTION PADS IN A DISC BRAKE CALIPER**
FEDER FÜR REIBBELÄGE IN EINEM SCHEIBENBREMSSATTEL
RESSORT POUR PLAQUETTES DE FREIN À DISQUE DANS UN ÉTRIER DE FREIN À DISQUE

(30) Priority: 20.06.2018 IT 201800006504
(43) Date of publication of application: 28.04.2021
(73) Proprietor: BREMBO S.p.A., 24035 Curno (BERGAMO) (IT)
(72) Inventor: CRIPPA, Cristian, 24035 Curno, Bergamo (IT); MECOCCI, Andrea, 24035 Curno, Bergamo (IT); MAMBRETTI, Mauro, 24035 Curno, Bergamo (IT)
(74) Representative: Leihkauf, Steffen Falk
(86) International application number: PCT/IB2019/054723
(87) International publication number: WO 2019/243934

(56) References cited:
- EP-A2- 0 560 146
- WO-A1-2008/075386
- WO-A1-2017/085619
- DE-A1- 2 536 619
- JP-A- H07 229 526
- US-A1- 2012 186 918
- US-A1- 2015 247 542
- US-A1- 2016 185 323
- US-A1- 2017 102 042
- US-B2- 9 862 362

## Description

The present invention relates to a spring for elastically retaining and positioning the pads in a disc brake caliper, as well as to a disc brake equipped with such a spring.

Cross-shaped expansion springs for fixed caliper disc brakes provided with a longitudinal piece, the ends of which abut e.g. against two support pins which support the pads, and a cross piece, the ends of which abut against the upper edges of the pads in order to retain the pads elastically in a "lowered" position, are known. By virtue of an inclined configuration of the lower surface of the cross piece, the expansion springs bias the pads away from one another to ensure a separation of the pads from the brake disc after each braking.

The ends of the longitudinal piece of the known expansion springs usually engage both support pins from underneath and the cross piece of the expansion springs presses from above in springing manner on the support plates of the pads.

The known expansion springs are thus used to obtain a three-fold action:
- to reduce the vibrations of the pads,
- to distance the brake pads from the brake disc in order to reduce or eliminate a residual braking torque due to undesired contacts between the brake pads and the brake disc with the brake deactivated,
- to obtain a uniform wear of the friction linings of the pads.

The expansion springs of the prior art abut on the pads with an application angle of the elastic force of less than 15° with respect to the plane of the pad and consequently transmit a high radial elastic force and a much lower elastic axial force to the pad. The axial elastic force moves the pads away from each other and from the brake disc along a planned axial sliding direction. In contrast with this, the radial elastic force generates a frictional resistance which opposes the axial thrust of the spring and thus the mutual distancing of the pads in the resting interfaces between the pads and the caliper, e.g. in resting interfaces between a support pin and a corresponding pad hole.

With the expansion springs of the prior art, the axial elastic force is insufficient to overcome the frictional resistance generated by the elastic radial elastic force in every operating condition of the brake in complete and reliable manner.

An incomplete detachment between brake pads and disc thus often occurs with the brake deactivated, resulting in:
- undesired residual braking moments,
- unplanned pad positioning and orientation,
- non-uniform pad wear.

Furthermore, the axial elastic force applied by the expansion springs of the prior art varies according to the wear state (and therefore according to the axial position) of the friction pad.

Consequently, the application conditions of the elastic forces and thus the constraint conditions of the pads are uncertain, difficult to predict with precision and variable over time. The balance of the moments acting on the friction pad is undesirably sensitive to (and influenced by) frictions and by geometric variability.

It follows that the distancing function of the pads from the brake disc is not ensured during the entire life cycle of the pad which gradually wears. US9862362B2 and WO2017/085619A1 describe friction pad spring solutions which form a closest state of the art for the present invention.

It is therefore the object of the present invention to provide an improved spring for pads and disc brake having such features as to reduce the residual braking torque with the brake deactivated and to improve and make more uniform the distancing function of the pads from the brake disc also in the presence of pad wear and during their entire life cycle.

In the scope of the general object of the invention, further objects relate to a reduction of the sensitivity (or in other words: an improvement of the robustness) of the elastic constraint system of the friction pads and in the balance of the moments acting on the friction pads, to geometric tolerances, friction effects and variations of the supporting conditions between the pads and the caliper and between the expansion spring and the pad.

These and other objects are achieved by a spring for pads according to claim 1 and by a disc brake according to claim 7. The dependent claims relate to advantageous and preferred embodiments.

In order to better understand the invention and appreciate its advantages, some nonlimiting examples of embodiments will be described below with reference to the accompanying figures, in which:
figure 1 is a radial section view (with respect to a rotation axis of a disc brake) of a disc brake according to an example, in deactivated configuration,
figure 2 shows the disc brake in figure 1 (with the brake disc removed for greater clarity) in an activated configuration,
figure 3 is a bottom view of the disc brake in figure 1,
figure 4 is a side view of the disc brake in figure 1,
figures 5 and 6 are perspective views of a disc brake pad according to an example,
figure 7 is a rear view of the friction pad in figure 5,
figure 8 is a side view of the friction pad in figure 5,
figures 9, 10, 11 are views of a spring for friction pad according to an example,
figure 12 is a perspective view of a disc brake (with brake disc removed for clarity) according to an embodiment,
figure 13 is a radial section view (with respect to a rotation axis of a disc brake) of the disc brake in figure 12,
figure 14 is a radial section view of the disc brake in figure 12, in a deactivated brake configuration,
figure 15 is a radial section view of the disc brake in figure 12, in an activated brake configuration,
figure 16 is a side view of the disc brake in figure 12,
figure 17 is a top view of the disc brake in figure 12,
figure 18 is a rear view of the disc brake in figure 12,
figure 19 is a longitudinal section view of the disc brake in figure 12,
figures 20-23 are views of a spring for friction pad according to an embodiment.

With reference to the figures, a disc brake, in particular for use on motor vehicles, is globally indicated by reference numeral 1. In the specific case, it is a disc brake of the fixed caliper type. However, the invention also applies to so-called floating calipers and to brakes with floating caliper.

The disc brake 1 comprises a caliper 2 and a brake disc 3. The caliper 2 can be fixed, e.g. by means of fixing screws, to a vehicle suspension, while the brake disc 3, provided with an annular braking band 4, can be connected to the wheel hub of the vehicle (not shown).

The caliper 2 comprises two side walls 5 which are arranged on both sides of the brake disc 3 and connected to each other by means of connecting elements which extend straddling the braking band 4 of the brake disc 3. Advantageously, the caliper 2 comprises two end bridges 6 delimiting a central opening 7, as well as at least or exactly one linkage 8 arranged in the central opening 7 and which structurally connects the two side walls 5 so as to limit the deformation of the caliper 2 during braking. Preferably, the linkage 8 is arranged approximately at the center of the central opening 7 so as to divide it into two half-openings 9, 10 of substantially equal circumferential extension (with reference to the brake disc 3).

At least two pads 11 having a support plate 12, e.g. made of steel, and a friction material lining 13, are each arranged on one side of the brake disc 3 at the braking band 4 and housed in dedicated seats 14 of the caliper 2 and supported by at least one, preferably two support pins 15. The size and mechanical strength of the support pins 15 is sufficient to allow the pads 11 to hang from or rest on such support pins 15, e.g. by means of a support hole or slot 16 formed in the support plate 12, preferably in a side end portion 17 or in two opposite side end portions 17 of the support plate 12, preferably in a radially inner half (with respect to a rotation axis 18 of the brake disc 3) and/or at or near a lower (i.e. radially inner) edge 19 of the support plate 12, in order to prevent radial displacements (related to the rotation axis 18 of the brake disc 3) of the friction pads 11. It is worth noting that the support pins 15 for the friction pads 11 generally do not contribute to the overall rigidity of the caliper 2.

The friction pads 11 are movable in direction perpendicular to the plane 55 of the brake disc 3 along the support pins 15 and are biased by thrust means, e.g. such as one or more hydraulic cylinder-piston units 20, 21 arranged in the caliper 2, so as to clamp, via the friction lining 13, a sector of the braking band 4, the surface and shape of which corresponds to those of the friction linings 13.

The disc brake 1 further comprises at least one pad spring 22 which applies an elastic preload onto the pads 11 to keep the friction pads 11 distanced from the brake disc 3 with the brake deactivated. The same one or more springs 22 or one or more additional springs 23 for pad can perform the further function of stopping the friction pads 11 elastically in the seats 14 and thus reducing the onset of vibrations and brake noise due to movements of the pads with respect to the caliper 2.

Generally, the disc brake 1 may comprise four springs 22, respectively two associated with each friction pad 11.

The spring 22 comprises an elongated plate 27 bent so as to form a descending fixing stretch 24, an ascending resting stretch 25, opposite to the fixing stretch 24, and an arch-shaped return stretch 26 formed between the fixing stretch 24 and the resting stretch 25, wherein the return stretch 26 extends from a narrowing region 29, in which the fixing stretch 24 and the resting stretch 25 locally approach each other, in form of a widened loop with respect to the narrowing region 29 to a lower apical region 28 of the spring 22.

The fixing stretch 24 forms a fixing seat 30 for interlocking the spring 22 to a corresponding fixing portion 31 formed by the caliper 2 or by the support plate 12 of the friction pad 11.

The resting stretch 25 forms a plate-shaped contact portion 32, preferably flat, for freely resting (with slipping possibility) the spring 22 against a corresponding contact surface 33 formed by the support plate 12 of the friction pad 11 or by the caliper 2.

With the spring 22 undeformed, the plate-shaped contact portion 32 extends, starting from the narrowing region 29, in diverging manner with respect to the fixing stretch 24 and is inclined with respect to the fixing portion 31 with an inclination angle 34 of less than 90°, preferably less than 60°.

The particular configuration of the spring 22 allows a fixing thereof by interlocking by means of the fixing seat 30 and a free support thereof (with possibility of sliding and orientation) by means of the plate-shaped contact portion 32, as well as an elastic widening of the distance between the fixing stretch 24 and the resting portion 25, against the elastic resistance generated by the elastic deformation of the large loop formed by the return portion 26. By virtue of the widening of the loop of the return stretch 26 with respect to the narrowing region 29, the return stretch 26 makes available a sufficiently intense elastic force towards the fixing stretch 24 and resting stretch 25 so as to effectively push the friction pads 11 away from the brake disc 3.

According to an example, the spring 22 is fixed in the disc brake 1 with the return segment 26 facing towards a lower (or radially inner) side 46 of the caliper 2, i.e. towards the rotation axis 18 of the brake disc 3 and extending at least partially, possibly completely, under the friction pad 11 (or in other words, radially more inwards with respect to the friction pad 11) and with the resting stretch 25 and the fixing stretch 24 both extending towards an upper side 47 of the caliper 2, i.e. radially outwards.

This low positioning of the springs 22 allows more space for the elastic loop of the return stretch 26 of the spring 22 and for an optimized choice of connection/resting regions between the springs 22 and the friction pads 11 regardless of the possible presence of the aforesaid additional springs 23 (anti-vibration springs) which are usually placed on a radially outer side of the friction pads 11.

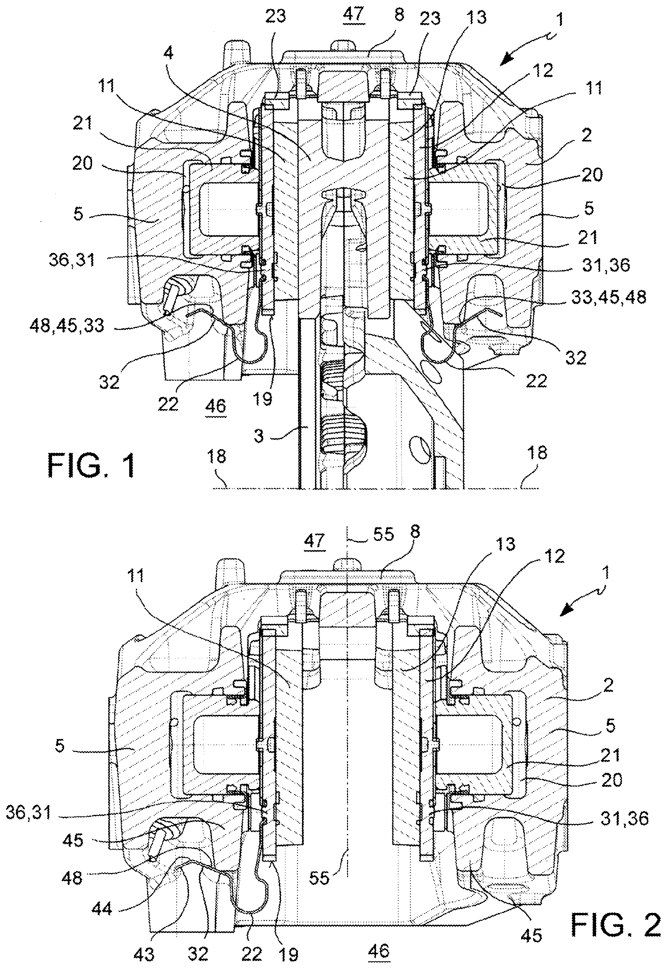

According to an example (figures 1-11), the fixing portion 31 is formed on the support plate 12 of the friction pad 11 and the contact surface 33 is formed on the caliper 2.

Advantageously, the fixing seat 30 of the spring 22 is locked onto the support plate 12 of the friction pad 11 on an outer side of the friction pad 11 facing away from the brake disc 3 and the contact portion 32 of the spring 22 abuts from below (i.e. from a radially inner side in a radially outer direction) against a wall portion 45 formed by the inner wall 5 and also protruding towards the lower (radially inner side) 46 of the caliper 2 (figures 1, 2).

More precisely, the contact portion 32 of the spring 11 extends in inclined manner from under the side portion 45 axially outwards (away from the brake disc 3) and radially upwards or towards the upper (radially outer) side 47 of the caliper 2 and rests in free contact and with the possibility of sliding on an axially outer edge 48 of a lower edge of the wall portion 45.

The contact portion 32 applies an axial elastic force towards the brake disc 3 and a radial elastic force towards the upper (radially outer) side 47 of the caliper 2 on the wall portion 45. The fixing stretch 24 of the spring 22 applies an axial elastic force away from the brake disc 3 and a radial elastic force towards the lower (radially inner) side 46 onto the friction pad 11.

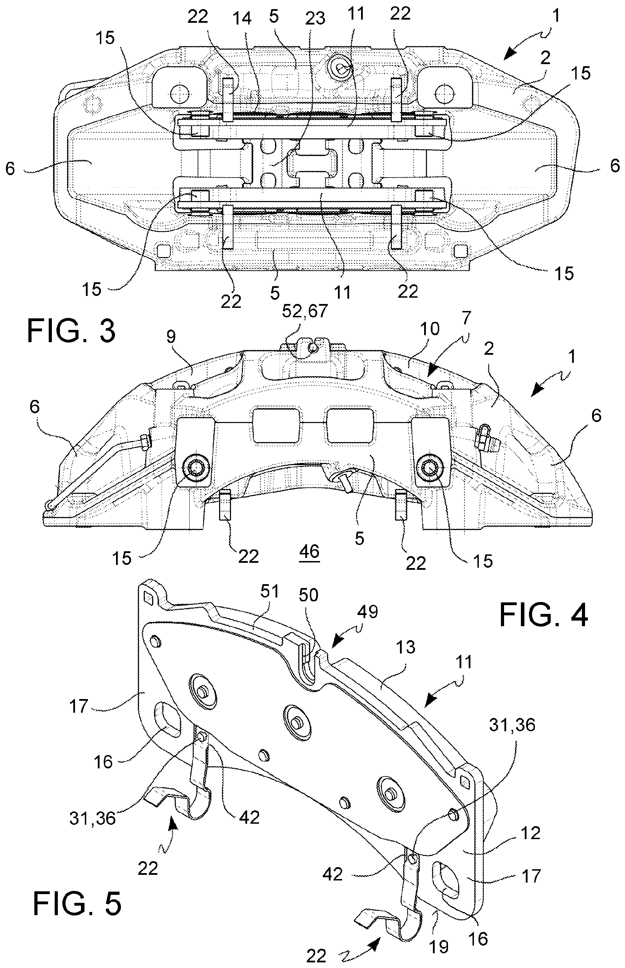

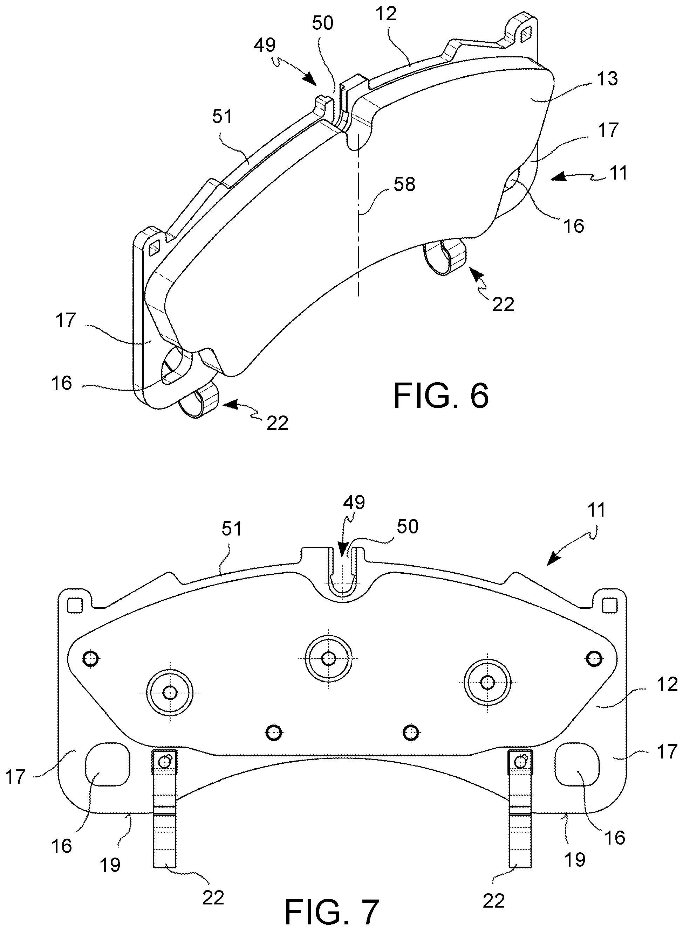

According to a further example (figure 5 and 7), the fixing portions 31 are formed in the support plate 12 at the same height (radial with respect to rotation axis 18 of the brake disc 3) of the support holes 16. Advantageously, the fixing portions 31 are each positioned laterally next to a support hole 16 and, preferably, on one side of the support hole 16 directed towards a circumferentially central area 49 of the friction pad 11.

Advantageously, both the support holes 16 and the fixing portions 31 are positioned at lower, i.e. radially inner, end zones and/or in side end zones 17, i.e. circumferentially more outward, of the support plate 12 of the friction pad 11.

In the example shown in figure 5, the lower end zone has a radial extension either equal to or less than 1/3 of the total radial extension (height) of the pad 11. Similarly, the side end zones 17 have a circumferential extension either equal to or smaller than 1/3, preferably equal to or smaller than 1/4, of the total circumferential extension (width) of the pad 11.

According to a further example (figures 5, 6, 7), the support plate 12 and possibly also the friction lining 13 of the friction pad 11 may form a central upper cavity 50 formed in a radially outer edge 51 of the pad 11 and positioned centrally between the fixing portions 31, to allow the passage of a central upper pin 52 fixed to both of the side walls 5 of the caliper 2 and forming a further positioning reference for the friction pads 11 and/or for the aforesaid further spring 23. Alternatively, the upper central cavity 50 can serve to allow the fixing of one or more sensors for signaling wear of the friction material.

The additional spring 23 can be supported by the caliper 2 and positioned on the radially outer side 47 of the caliper 2 and elastically push against the radially outer edge 51 of the support plate 12 of the friction pad 11, to bias the friction pad 11 towards the radially inner side 46 against the support pins 15.

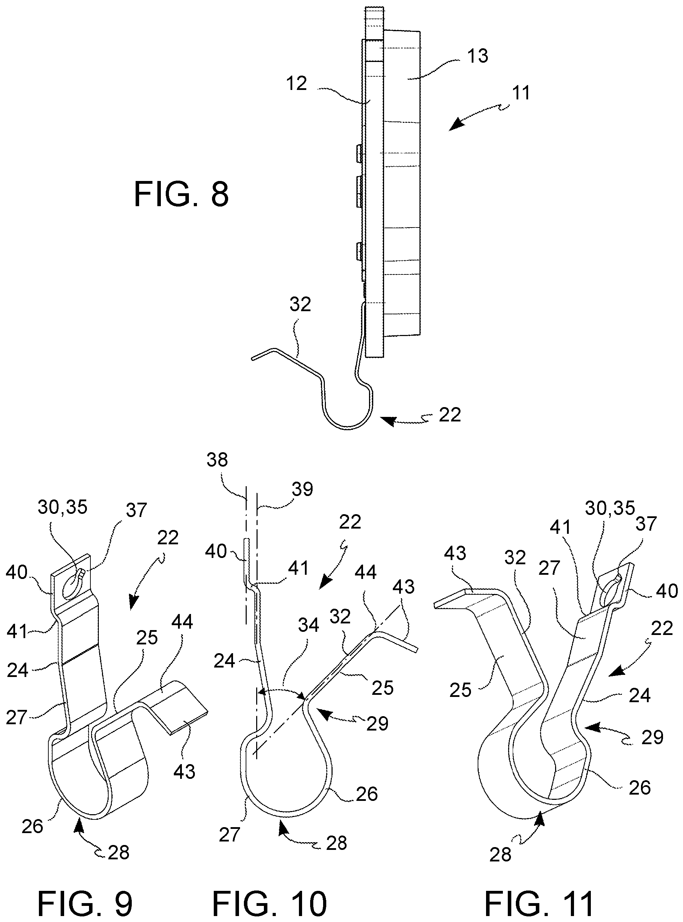

According to an example (figure 9), the fixing seat 30 may comprise a through hole 35 formed in an end portion 40 of the fixing stretch 24 and adapted to accommodate a corresponding protrusion 36 formed(e. g. riveted or drawn) in or by the fixing portion 31. The through hole 35 may have a substantially circular shape with one or more external recesses 37 which perform, for example, an anti-rotation locking function of the spring, being the outer recess 37 then filled by the protuberances 31 and 36 which are plastically deformed to constrain the springs to the pad.

According to a further example (figures 9, 5), a step 41 is formed between the end portion 40 of the fixing stretch 24 and a further adjacent portion of the fixing stretch 24, which makes an offset, between a fixing plane 38 defined by the end portion 40 and an extension plane 39 on which the portion adjacent to the fixing stretch 24 extends.

By virtue of the offset of the end portion 40, preferably away from resting stretch 25, the entire end portion 40 or at least one part of the fixing stretch adjacent to the end portion 40 can be accommodated (with shape coupling) in a dedicated recess 42 formed by the fixing portion 31 (figure 5). In this manner, it is possible to interlock the spring 22 against rotations about an axis parallel to the rotation axis of the brake disc 3. towards the rotation axis 18) and/or
- a convex bending edge 44 is formed (preferably without sharp edges) facing in the direction opposite to the lower apical region 28 of the spring 22, i.e. upwards or radially outwards, between the contact portion 32 and the free end portion 43.

According to a further example, a free end portion 43 of the resting stretch 25 bent with respect to the contact portion 32 (adjacent thereto) in a direction facing away from the fixing stretch 24, so that:
- the free end portion 43 protrudes away from the fixing portion 24 and, preferably, downwards (i.e. radially towards the rotation axis 18) and/or
- a convex bending edge 44 is formed (preferably without sharp edges) facing in the direction opposite to the lower apical region 28 of the spring 22, i.e. upwards or radially outwards, between the contact portion 32 and the free end portion 43.

In this manner, the free end portion 43 forms a guided and snapping positioning of the contact portion 32 onto the contact surface 33, during the axial insertion (with respect to the rotation axis 18 of the brake disc 3) of the friction pad 11 on the support pins 15 and the seat 14 formed in the caliper 2 (figures 1,2).

Advantageously, the spring 22 is formed in one piece, preferably of plate-shaped or strip-shaped metallic material contoured so as to display only curvatures about axes substantially parallel to one another and substantially parallel to the plane 55 of the brake disc 3, with the spring 22 mounted in the caliper 2.

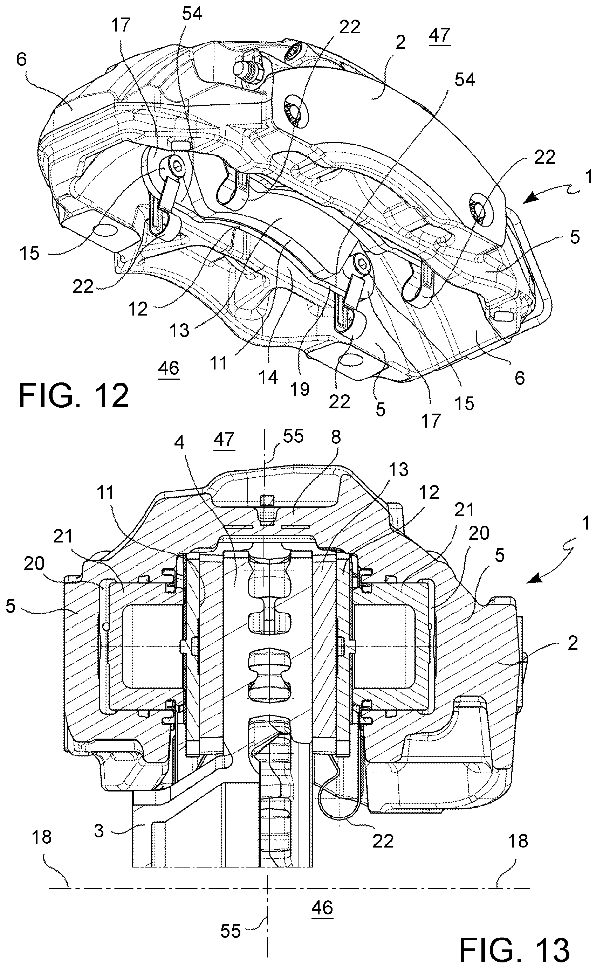

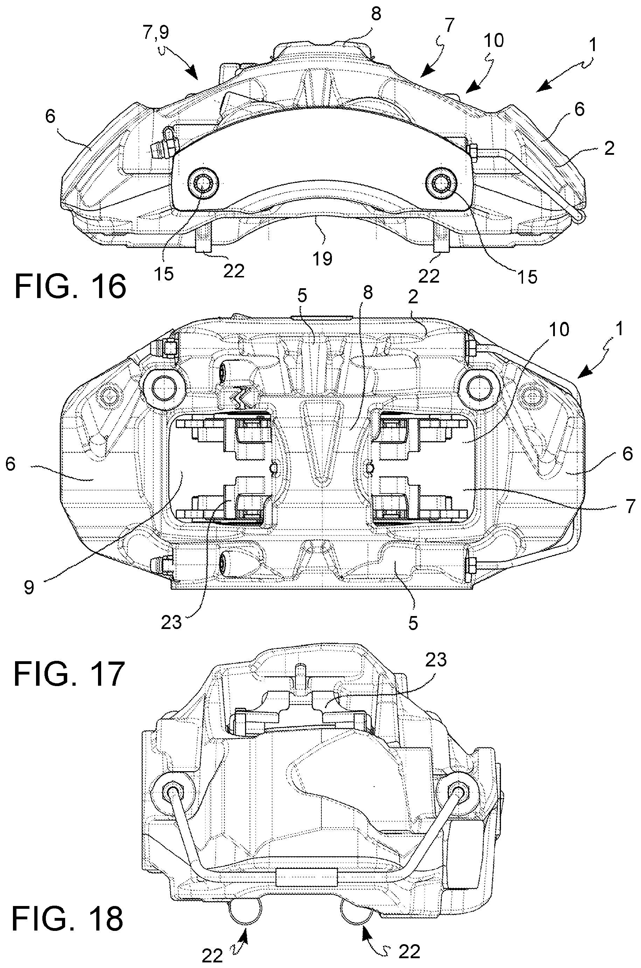

In accordance with a further embodiment (figures 12-23), the fixing portion 31 is formed at the caliper 2, preferably at the support pin 15, and the contact surface 33 is formed at the support plate 12 of the friction pad 11.

Advantageously, the fixing seat 30 of the spring 22 is locked to the support pin 15 on a rear side of the friction pad 11 facing away from the brake disc 3 and the contact portion 32 of the spring 22 abuts brom below (i.e. on a radially inner side in radially outer direction) against a lower (i.e. radially inner) edge 19 of the support plate 12 of the friction pad 11 (figure 12, 14, 15).

More precisely, the contact portion 32 of the spring 11 extends in inclined manner from below the support plate 12 axially inwards (towards the brake disc 3) and radially upwards or towards the upper (radially outer) side 47 of the caliper 2 and rests in free contact and with possibility of sliding against an axially inner edge 54 of the inner edge 19.

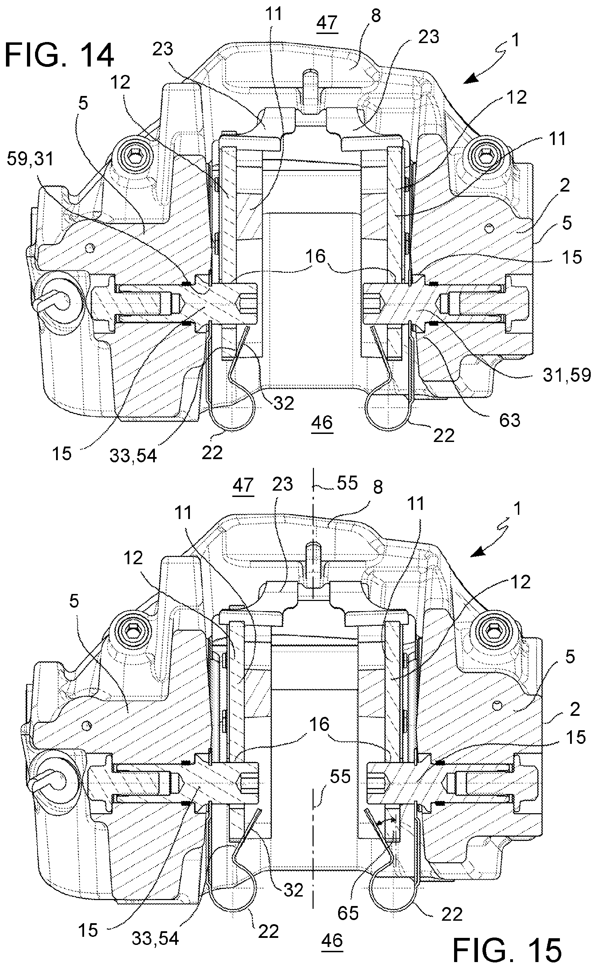

The contact portion 32 applies an axial elastic force away from the brake disc 3 and a (nearly negligible) radial elastic force towards the upper (radially outer) side 47 of the caliper 2 on the friction pad 11. Indeed, the inclination angle 65 (figure 15) of the contact portion 32 with respect to the plane 55 the brake disc 3 is lower than 45°, preferably less than or equal to 30°, so as to transmit a force component prevalent in axial direction. The fixing stretch 24 of the spring 22 applies on the support pin 15 an axial elastic force in approaching direction toward the brake disc 3 and a (nearly negligible) radial elastic force towards the lower (radially inner) side 46 (figures 14, 15).

According to an embodiment (figures 15, 19, 23), the fixing portions 31 for the springs 22 are formed in the support pins 15 in a centered manner with respect to the support holes 16 of the friction pads 11.

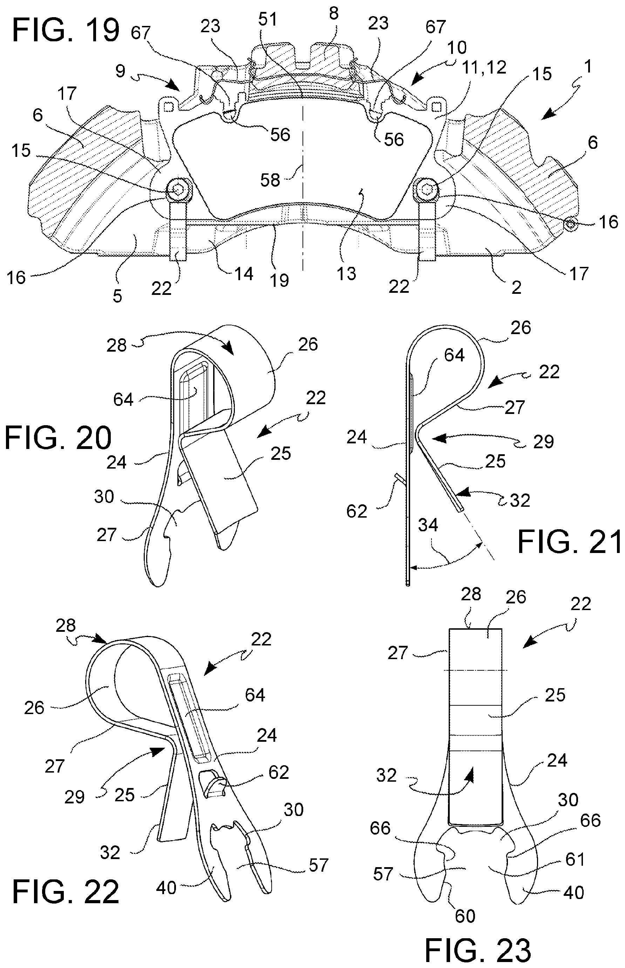

Advantageously, both the support holes 16 and the fixing portions 31 (formed not at the friction pad 11 but at the support pins 15) are positioned at lower, i.e. radially inner, end zones and/or in side end zones 17, i.e. circumferentially more outward, of the support plate 12 inserted on the support pins 15 (figures 15, 19).

In the embodiment shown in figure 19, the lower end zone has a radial extension either equal to or smaller than 2/5, preferably equal to or smaller than 1/3 of the total radial extension (height) of the pad 11. Similarly, the side end zones 17 have a circumferential extension either equal to or smaller than 1/5, preferably equal to or smaller than 1/6, of the total circumferential extension (width) of the pad 11.

According to a further embodiment (figure 19), the support plate 12 and possibly also the friction lining 13 of the friction pad 11 can form one or more upper cavities 56 formed in a radially outer edge 51 of the pad 11 and positioned symmetrically with respect to a radial median plane 58 of the pad 11 to allow fixing of one or more sensors for signaling the friction material wear.

The additional spring 23 can be supported by the caliper 2 and positioned on the radially outer side 47 of the caliper 2 and elastically push against the radially outer edge 51 of the support plate 12 of the friction pad 11, to bias the friction pad 11 towards the radially inner side 46 against the support pins 15.

Advantageously, with reference to both described embodiments, the shape of the friction pad 11, seen from the side facing towards the disc brake 3, can be symmetrical with respect to the median radial plane 58 of the friction pad 11. With further advantage, also the position of the springs 22 is symmetrical with respect to the median radial plane 58 of the friction pad 11 (figures 6, 19).

According to an embodiment (figures 22, 23), the fixing seat 30 may include a recess 57 formed in an end portion 40 of the fixing stretch 24 and adapted to embrace the corresponding support pin 15 and possibly to be inserted in a groove 59, preferably annular, possibly formed in the support pin 15. The recess 57 forms a converging inlet portion 60 and a inner portion 61 wider with respect to the input portion 60 and, preferably, two or more projections 66 which protrude into the inside of the recess 57, so as to form a lead-in for a centered insertion of a recess 57 of the spring 22 into the circumferential groove 59 of the supporting pin 15 and to allow a temporary widening of the recess 57 with the purpose of snap-engaging with the support pin 15.

According to an embodiment (figures 15, 22), the fixing stretch 24 of the spring 22 forms a tongue 62 bent out from a plane of the fixing stretch 24 preferably towards a side facing away from the brake disc 3, and adapted to be used as thrust plane for fitting the spring 22 in the support pin 15. In this manner, it is possible to fix the springs 22 to the support pins 15 by means of a simple insertion by snapping from below, during which insertion the end portions 40 are inserted or elastically snap into the corresponding groove 59 (if provided) and blocks the spring 22 to the support pin 15.

In this regard, the fixing portion 31, in particular, the annular groove 59, is advantageously formed on a plane immediately adjacent to an inner surface of the side wall 5 of the caliper 2.

According to the invention (figures 20-22), the fixing stretch 24 of the spring 22 forms a reinforcing rib 64, preferably a local deformation produced by pressing, e.g. a indent or a drawing, which stiffens the fixing stretch 24 so as to concentrate the elastic deformation of the spring 22 mainly in its return stretch 26 and to increase the total rigidity of the spring 22, the elastic material, e.g. steel for springs, used being equal.

Advantageously, the spring 22 is formed in one piece, preferably of plate-shaped or strip-shaped metallic material contoured so as to display only curvatures about axes substantially parallel to one another and substantially parallel to the plane of the brake disc 3, with the spring 22 mounted in the caliper 2 (with the exception of the anti-rotation tongue 62 and of the reinforcing rib 64).

From the description provided, the person skilled in the art will appreciate that the spring 22 for friction pad 11 and the disc brake 1 according to the invention keeps the pads detached from the brake disc when the brake is deactivated, thereby reducing the residual braking torque with the brake deactivated.

Furthermore, the disc brake 1 and the spring 22 according to the invention are less sensitive to geometric tolerances, to the effects of friction and to variations in the support conditions between the pads 11 and the caliper 2 and between the spring 22 and the pad 11. As a result, the springs 22 provide a more intense axial elastic bias, which is more uniform even in the presence of a progressive wear of the friction lining 13 of the pads 11.

Furthermore, the spring 22 according to the invention can be easily fitted onto the caliper and onto the friction pad and its position does not violate the space of other functional components of the brake, whereby allowing an optimized placement and sizing targeted for each of the functional components.

Obviously, a person skilled in art may make further changes and variants to the spring 22 for pads 11 and to the disc brake 1 according to the present invention all without departing from the scope of protection of the invention, as defined in the following claims.

## Claims

1. A spring (22) for friction pads (11) associable with a caliper (2) of a disc brake (1) for elastically biasing the friction pads (11) away from a brake disc (3) of the disc brake (1), said spring (22) comprising an elongated plate (27) bent so as to form:
- a descending fixing stretch (24),
- an ascending resting stretch (25), opposite to the fixing stretch (24),
wherein the fixing stretch (24) forms a fixing seat (30) for interlocking the spring (22) to a corresponding fixing portion (31) of either the caliper (2) or the friction pad (11),
wherein the resting stretch (25) forms a plate-shaped contact portion (32) for freely resting the spring (22), with slipping possibility, against a contact surface (33) of either the friction pad (11) or the caliper (2), **characterised in that** a return stretch (26) is formed between the fixing stretch (24) and the resting stretch (25), wherein the return stretch (26) extends from a narrowing region (29), in which the fixing stretch (24) and the resting stretch (25) locally approach each other until reaching a lower apical region (28) of the spring (22), and
wherein, when the spring (22) is undeformed, the contact portion (32) extends, starting from the narrowing region (29), in a diverging manner with respect to the fixing stretch (24),
wherein the fixing stretch (24) of the spring (22) forms a reinforcing rib (64) which stiffens the fixing portion (24) so as to concentrate the elastic deformation of the spring (22) mainly in the return stretch (26) thereof.

2. A spring (22) according to claim 1, wherein the return stretch (26) extends from the narrowing region (29) in the form of widened loop with respect to the narrowing region (29).

3. A spring (22) according to claim 1 or 2, wherein, when the spring (22) is undeformed, the contact portion (32) is inclined with respect to the fixing portion (31) by an inclination angle (34) smaller than 90° or smaller than 60°.

4. A spring (22) according to any one of the preceding claims, wherein the spring (22) is formed in a single steel strip bent so as to exhibit only bends about axes parallel to one another and parallel to the plane (55) of the brake disc (3), when the spring (22) is mounted in the caliper (2).

5. A spring (22) according to any one of the preceding claims, wherein the fixing seat (30) comprises a recess (57) formed in an end portion (40) of the fixing stretch (24), wherein said recess (57) forms:
- a converging inlet portion (60), which forms a lead-in for inserting a support pin (15) of the brake disc (1),
- an inner portion (61) widened with respect to the inlet portion (60) and protrusions (66) which protrude into the recess (57), so as to allow a temporary widening of the recess (57) for snap-engaging the support pin (15).

6. A spring (22) according to any one of the preceding claims, wherein the fixing stretch (24) forms a tongue (62) bent out from a plane of the fixing stretch (24) and which forms a thrust abutment for mounting the spring (22) to the fixing portion (31).

7. A disc brake (1) comprising:
- a caliper (2) with two side walls (5) arranged on both sides of a disc plane (55) and forming pad seats (14), wherein the two side walls (5) are connected to each other by end bridges (6) which delimit a central opening (7),
- a pair of friction pads (11) arranged in said pad seats (14) and having a support plate (12) bearing a friction lining (13) and forming supporting holes (16),
- one or more support pins (15) protruding from the side walls (5) and inserted into the support holes (16) for supporting the friction pads (11);
- one or more springs (22) according to any one of the preceding claims;
wherein the spring (22) is fixed in the disc brake (1) with the return stretch (26) facing a radially inner side (46) of the caliper (2) and wherein the return stretch (26) completely extends more radially internal with respect to the friction pad (11), and with the resting stretch (25) and the fixing stretch (24) both extending towards a radially outer side (47) of the caliper (2).

8. A disc brake (1) according to claim 7, wherein the fixing portion (31) is formed at the support pin (15) of the caliper (2) and the contact surface (33) is formed at the support plate (12) of the friction pad (11).

9. A disc brake (1) according to claim 8, wherein the fixing seat (30) of the spring (22) is locked to the support pin (15) on a rear side of the friction pad (11) facing away from the brake disc (3) and the contact portion (32) of the spring (22) abuts on a radially inner side (46) of the caliper (2) in a radially outer direction against a radially inner edge (19) of the support plate (12) of the friction pad (11),
wherein the contact portion (32) extends in an inclined manner from below the support plate (12) axially towards the brake disc (3) and radially towards the radially outer side (47) of the caliper (2) and rests in free contact and with the possibility of sliding against an axially inner edge (54) of the radially inner edge (19),
wherein the contact portion (32) applies, to the friction pad (11), an axial elastic force away from the brake disc (3) and a radial elastic force towards the radially outer side (47) of the caliper (2) of lower intensity than said axial elastic force,
wherein the fixing stretch (24) of the spring (22) applies, to the support pin (15), an axial elastic force towards the brake disc (3) and a radial elastic force towards the radially inner side (46).

10. A disc brake (1) according to claim 9, wherein an inclination angle (65) of the contact portion (32) with respect to the plane (55) of the disc brake (3) is either less than 45° or less than 30°.

11. A disc brake (1) according to any of the claims from 7 to 10, wherein:
- the fixing portions (31) for the springs (22) are formed in the support pins (15) in a centered manner with respect to the support holes (16) of the friction pads (11),
- the support holes (16) of the friction pads (11) are positioned at radially inner and circumferentially outer end zones of the support plate (12),
- said end zones have a radial extension either equal to or smaller than 2/5, preferably either equal to or smaller than 1/3 of the total radial extension of the pad (11), as well as a circumferential extension either equal to or smaller than 1/5, preferably either equal to or smaller than 1/6, of the total circumferential extension of the pad (11).

12. A disc brake (1) according to any one of claims 7 to 11, wherein the recess (57) of the spring (22) embraces the support pin (15) and is inserted into an annular groove (59) formed in the support pin (15).

13. A disc brake (1) according to any one of claims 7 to 12, comprising one or more further springs (23) supported by the caliper (2) and positioned on a radially outer side (47) of the caliper (2) and which elastically push against a radially outer edge (51) of the support plate (12) of the friction pad (11).

## Patentansprüche

1. Feder (22) für Reibbeläge (11), welche einem Sattel (2) einer Scheibenbremse (1) für ein elastisches Vorbelasten der Reibbeläge (11) weg von einer Bremsscheibe (3) der Scheibenbremse (1) zuordenbar sind, wobei die Feder (22) eine längliche Platte (27) umfasst, welche derart gebogen ist, das sie bildet:
- eine absteigende Fixierungsstrecke (24),
- eine aufsteigende Ruhestrecke (25) gegenüber der Fixierungsstrecke (24),
wobei die Fixierungsstrecke (24) einen Fixierungssitz (30) zum Verriegeln der Feder (22) an einem entsprechenden Fixierungsabschnitt (31) von entweder dem Sattel (2) oder dem Reibbelag (11) bildet,
wobei die Ruhestrecke (25) einen plattenförmigen Kontaktabschnitt (32) für ein freies Ruhen der Feder (22) mit einer Möglichkeit zum Rutschen gegen eine Kontaktfläche (33) von entweder dem Reibbelag (11) oder dem Sattel (2) bildet, **dadurch gekennzeichnet, dass** eine Rückkehrstrecke (26) zwischen der Fixierungsstrecke (24) und der Ruhestrecke (25) gebildet ist, wobei sich die Ruhestrecke (26) von einem sich verjüngenden Bereich (29) erstreckt, in welchem sich die Fixierungsstrecke (24) und die Ruhestrecke (25) lokal annähern, bis sie einen unteren Scheitelbereich (28) der Feder (22) erreichen, und wobei, wenn die Feder (22) undeformiert ist, sich der Kontaktabschnitt (32) beginnend von dem sich verjüngenden Abschnitt (29) in einer divergierenden Weise bezüglich der Fixierungsstrecke (24) erstreckt,
wobei die Fixierungsstrecke (24) der Feder (22) eine Verstärkungsrippe (64) bildet, welche den Fixierungsabschnitt (24) versteift, um so die elastische Deformation der Feder (22) hauptsächlich in der Rückkehrstrecke (26) davon zu konzentrieren.

2. Feder (22) nach Anspruch 1, wobei sich die Rückkehrstrecke (26) von dem sich verjüngenden Abschnitt (29) in der Form einer aufgeweiteten Schleife bezüglich des sich verjüngenden Abschnitts (29) erstreckt.

3. Feder (22) nach Anspruch 1 oder 2, wobei, wenn die Feder (22) undeformiert ist, der Kontaktabschnitt (32) bezüglich des Fixierungsabschnitts (31) um einen Neigungswinkel (34) geneigt ist, welcher kleiner als 90° oder kleiner als 60° ist.

4. Feder (22) nach einem der vorhergehenden Ansprüche, wobei die Feder (22) in einem einzelnen Stahlstreifen gebildet ist, welcher derart gebogen ist, dass er lediglich Biegungen um Achsen parallel zueinander und parallel zu der Ebene (55) der Bremsscheibe (3) zeigt, wenn die Feder (22) in dem Sattel (2) montiert ist.

5. Feder (22) nach einem der vorhergehenden Ansprüche, wobei der Fixierungssitz (30) eine Ausnehmung (57) umfasst, welche in einem Endabschnitt (40) der Fixierungsstrecke (24) gebildet ist, wobei die Ausnehmung (57) bildet:
- einen konvergierenden Einlassabschnitt (60), welcher eine Einführung zum Einsetzen eines Tragestifts (15) der Bremsscheibe (1) bildet,
- einen inneren Abschnitt (61), welcher bezüglich des Einlassabschnitts (60) aufgeweitet ist, sowie Vorsprünge (66), welche in die Ausnehmung (57) vorstehen, um so ein zeitweiliges Aufweiten der Ausnehmung (57) für einen Schnappeingriff mit dem Tragestift (15) zu erlauben.

6. Feder (22) nach einem der vorhergehenden Ansprüche, wobei die Fixierungsstrecke (24) eine Zunge (62) bildet, welche aus einer Ebene der Fixierungsstrecke (24) herausgebogen ist und welche eine Schubanlage für ein Montieren der Feder (22) an dem Fixierungsabschnitt (31) bildet.

7. Scheibenbremse (1), umfassend:
- einen Sattel (2) mit zwei Seitenwänden (5), welche an beiden Seiten einer Scheibenebene (55) angeordnet sind und Belagsitze (14) bilden, wobei die beiden Seitenwände (5) miteinander durch Endbrücken (6) verbunden sind, welche eine zentrale Öffnung (7) begrenzen,
- ein Paar von Reibbelägen (11), welche in den Belagsitzen (14) angeordnet sind und eine Trageplatte (12) aufweisen, welche mit einer Reibbeschichtung (13) versehen ist und Tragelöcher (16) bildet,
- einen oder mehrere Tragestifte (15), welche von den Seitenwänden (5) vorstehen und in die Tragelöcher (16) zum Tragen der Reibbeläge (11) eingesetzt sind;
- eine oder mehrere Federn (22) nach einem der vorhergehenden Ansprüche;
wobei die Feder (22) in der Scheibenbremse (1) mit der Rückkehrstrecke (26) zu einer radial inneren Seite (46) des Sattels (2) fixiert ist und wobei sich die Rückkehrstrecke (26) vollständig weiter radial innen bezüglich des Reibbelags (11) erstreckt, und wobei sich die Ruhestrecke (25) und die Fixierungsstrecke (24) beide in Richtung einer radial äußeren Seite (47) des Sattels (2) erstrecken.

8. Scheibenbremse (1) nach Anspruch 7, wobei der Fixierungsabschnitt (31) an dem Tragestift (15) des Sattels (2) gebildet ist und die Kontaktfläche (33) an der Trageplatte (12) des Reibbelags (11) gebildet ist.

9. Scheibenbremse (1) nach Anspruch 8, wobei der Fixierungssitz (30) der Feder (22) an den Tragestift (15) an einer hinteren Seite des Reibbelags (11) verriegelt ist, welcher von der Bremsscheibe (3) weg weist, und der Kontaktabschnitt (32) der Feder (22) an einer radial inneren Seite (46) des Sattels (2) in einer radial äußeren Richtung gegen einen radial inneren Rand (19) der Trageplatte (12) des Reibbelags (11) anliegt,
wobei sich der Kontaktabschnitt (32) in einer geneigten Weise von unterhalb der Trageplatte (12) axial in Richtung der Bremsscheibe (3) und radial in Richtung der radial äußeren Seite (47) des Sattels (2) erstreckt und in freiem Kontakt und mit der Möglichkeit eines Rutschens gegen einen axial inneren Rand (54) des radial inneren Rands (19) ruht,
wobei der Kontaktabschnitt (32) auf den Reibbelag (11) eine axiale elastische Kraft weg von der Bremsscheibe (3) und eine radiale elastische Kraft in Richtung der radial äußeren Seite (47) des Sattels (2) von geringerer Intensität als die axiale elastische Kraft ausübt,
wobei die Fixierungsstrecke (24) der Feder (22) auf den Tragestift (15) eine axiale elastische Kraft in Richtung der Bremsscheibe (3) und eine radiale elastische Kraft in Richtung der radial inneren Seite (46) ausübt.

10. Scheibenbremse (1) nach Anspruch 9, wobei ein Neigungswinkel (65) des Kontaktabschnitts (32) bezüglich der Ebene (55) der Scheibenbremse (3) entweder kleiner als 45° oder kleiner als 30° ist.

11. Scheibenbremse (1) nach einem der Ansprüche von 7 bis 10, wobei:
- die Fixierungsabschnitte (31) für die Federn (22) in den Tragestiften (15) in einer zentrierten Weise bezüglich der Tragelöcher (16) der Reibbeläge (11) gebildet sind,
- die Tragelöcher (16) der Reibbeläge (11) an radial inneren und umfänglich äußeren Endzonen der Trageplatte (12) positioniert sind,
- die Endzonen eine radiale Erstreckung aufweisen, welche gleich oder kleiner als 2/5, vorzugsweise entweder gleich oder kleiner als 1/3, der gesamten radialen Erstreckung des Belags (11) ist, sowie eine umfängliche Erstreckung, welche entweder gleich oder kleiner als 1/5, vorzugsweise entweder gleich oder kleiner als 1/6, der gesamten umfänglichen Erstreckung des Belags (11) ist.

12. Scheibenbremse (1) nach einem der Ansprüche 7 bis 11, wobei die Ausnehmung (57) der Feder (22) den Tragestift (15) umgibt und in eine ringförmige Nut (59) eingesetzt ist, welche in dem Tragestift (15) gebildet ist.

13. Scheibenbremse (1) nach einem der Ansprüche 7 bis 12, umfassend eine oder mehrere weitere Federn (23), welche von dem Sattel (2) getragen und an einer radial äußeren Seite (47) des Sattels (2) positioniert sind und welche elastisch gegen einen radial äußeren Rand (51) der Trageplatte (12) des Reibbelags (11) drücken.

## Revendications

1. Ressort (22) pour plaquettes (11) associable à un étrier (2) d'un frein à disque (1) pour solliciter élastiquement les plaquettes (11) à l'écart d'un disque de frein (3) du frein à disque (1), ledit ressort (22) comprenant une plaque allongée (27) pliée de manière à former :
- un tronçon de fixation descendant (24),
- un tronçon de repos ascendant (25) à l'opposé du tronçon de fixation (24),
dans lequel le tronçon de fixation (24) forme un siège de fixation (30) pour emboîter le ressort (22) avec une portion de fixation (31) correspondante de l'étrier (2) ou de la plaquette (11),
dans lequel le tronçon de repos (25) forme une portion de contact en forme de plaque (32) pour reposer librement le ressort (22), avec une possibilité de glissement, contre une surface de contact (33) de la plaquette (11) ou de l'étrier (2), caractérisé ce qu'un tronçon de retour (26) est formé entre le tronçon de fixation (24) et le tronçon de repos (25), dans lequel le tronçon de retour (26) s'étend depuis une région de rétrécissement (29), dans laquelle le tronçon de fixation (24) et le tronçon de repos (25) se rapprochent localement l'un de l'autre jusqu'à atteindre une région apicale inférieure (28) du ressort (22), et
dans lequel, lorsque le ressort (22) n'est pas déformé, la portion de contact (32) s'étend, en commençant depuis la région de rétrécissement (29), d'une manière divergente par rapport au tronçon de fixation (24),
, dans lequel le tronçon de fixation (24) du ressort (22) forme une nervure de renforcement (64) qui rigidifie la portion de fixation (24) de manière à concentrer la déformation élastique du ressort (22) principalement dans le tronçon de retour (26) de celui-ci.

2. Ressort (22) selon la revendication 1, dans lequel le tronçon de retour (26) s'étend depuis la région de rétrécissement (29) sous la forme d'une boucle élargie par rapport à la région de rétrécissement (29).

3. Ressort (22) selon la revendication 1 ou 2, dans lequel, lorsque le ressort (22) n'est pas déformé, la portion de contact (32) est inclinée par rapport à la portion de fixation (31) d'un angle d'inclinaison (34) inférieur à 90° ou inférieur à 60°.

4. Ressort (22) selon l'une quelconque des revendications précédentes, dans lequel le ressort (22) est formé dans une bande d'acier unique pliée de manière à ne présenter des courbures qu'autour d'axes parallèles les uns aux autres et parallèles au plan (55) du disque de frein (3), lorsque le ressort (22) est monté dans l'étrier (2).

5. Ressort (22) selon l'une quelconque des revendications précédentes, dans lequel le siège de fixation (30) comprend un évidement (57) formé dans une portion d'extrémité (40) du tronçon de fixation (24), dans lequel ledit évidement (57) forme :
- une portion d'entrée convergente (60), qui forme une amorce pour insérer une broche de support (15) du disque de frein (1),
- une portion intérieure (61) élargie par rapport à la portion d'entrée (60) et à des saillies (66) saillantes dans l'évidement (57), de manière à permettre un élargissement provisoire de l'évidement (57) pour l'encliquetage de la broche de support (15).

6. Ressort (22) selon l'une quelconque des revendications précédentes, dans lequel le tronçon de fixation (24) forme une langue (62) pliée vers l'extérieur depuis un plan du tronçon de fixation (24) et qui forme une butée de poussée pour monter le ressort (22) sur la portion de fixation (31).

7. Frein à disque (1) comprenant :
- un étrier (2) avec deux parois latérales (5) agencées des deux côtés d'un plan de disque (55) et formant des sièges de plaquettes (14), dans lequel les deux parois latérales (5) sont reliées l'une à l'autre par des ponts d'extrémité (6) qui délimitent une ouverture centrale (7),
- une paire de plaquettes (11) agencées dans lesdits sièges de plaquettes (14) et comportant une plaque de support (12) portant une garniture de friction (13) et formant des trous de support (16),
- une ou plusieurs broches de support (15) saillantes depuis les parois latérales (5) et insérées dans les trous de support (16) pour supporter les plaquettes (11) ;
- un ou plusieurs ressorts (22) selon l'une quelconque des revendications précédentes ;
dans lequel le ressort (22) est fixé dans le frein à disque (1) avec le tronçon de retour (26) faisant face à un côté radialement intérieur (46) de l'étrier (2) et dans lequel le tronçon de retour (26) s'étend complètement plus radialement vers l'intérieur par rapport à la plaquette (11) et avec le tronçon de repos (25) et le tronçon de fixation (24) qui s'étendent tous les deux vers un côté radialement extérieur (47) de l'étrier (2).

8. Frein à disque (1) selon la revendication 7, dans lequel la portion de fixation (31) est formée à la broche de support (15) de l'étrier (2) et la surface de contact (33) est formée à la plaque de support (12) de la plaquette (11).

9. Frein à disque (1) selon la revendication 8, dans lequel le siège de fixation (30) du ressort (22) est verrouillé à la broche de support (15) sur un côté arrière de la plaquette (11) faisant face à l'écart du disque de frein (3) et la portion de contact (32) du ressort (22) vient en butée sur un côté radialement intérieur (46) de l'étrier (2) dans une direction radialement vers l'extérieur contre un bord radialement intérieur (19) de la plaque de support (12) de la plaquette (11),
dans lequel la portion de contact (32) s'étend d'une manière inclinée depuis le dessous de la plaque de support (12) axialement vers le disque de frein (3) et radialement vers le côté radialement extérieur (47) de l'étrier (2) et repose en contact libre et avec la possibilité de glisser contre un bord axialement intérieur (54) du bord radialement intérieur (19),
dans lequel la portion de contact (32) applique, à la plaquette (11), une force élastique axiale à l'écart du disque de frein (3) et une force élastique radiale vers le côté radialement extérieur (47) de l'étrier (2) d'une intensité inférieure à ladite force élastique axiale,
dans lequel le tronçon de fixation (24) du ressort (22) applique, à la broche de support (15), une force élastique axiale vers le disque de frein (3) et une force élastique radiale vers le côté radialement intérieur (46).

10. Frein à disque (1) selon la revendication 9, dans lequel un angle d'inclinaison (65) de la portion de contact (32) par rapport au plan (55) du frein à disque (3) est inférieur à 45° ou inférieur à 30°.

11. Frein à disque (1) selon l'une quelconque des revendications 7 à 10, dans lequel :
- les portions de fixation (31) pour les ressorts (32) sont formées dans les broches de support (15) d'une manière centrée par rapport aux trous de support (16) des plaquettes (11),
- les trous de support (16) des plaquettes (11) sont positionnés à des zones d'extrémité radialement intérieures et circonférentiellement extérieures de la plaque de support (12),
- lesdites zones d'extrémité comportent une extension radiale inférieure ou égale à 2/5, de préférence inférieure ou égale à 1/3, de l'extension radiale totale de la plaquette (11), ainsi qu'une extension circonférentielle inférieure ou égale à 1/5, de préférence inférieure ou égale à 1/6, de l'extension circonférentielle totale de la plaquette (11).

12. Frein à disque (1) selon l'une quelconque des revendications 7 à 11, dans lequel l'évidement (57) du ressort (22) renferme la broche de support (15) et est inséré dans une rainure annulaire (59) formée dans la broche de support (15).

13. Frein à disque (1) selon l'une quelconque des revendications 7 à 12, comprenant en outre un ou plusieurs autres ressorts (23) supportés par l'étrier (2) et positionnés sur un côté radialement extérieur (47) de l'étrier (2) et qui poussent élastiquement contre un bord radialement extérieur (51) de la plaque de support (12) de la plaquette (11).
